Europäisches Patentamt

(19) European Patent Office

Office européen des brevets

(11) Numéro de publication : **0 090 326**
**B1**

(12) **FASCICULE DE BREVET EUROPÉEN**

(45) Date de publication du fascicule du brevet :
30.07.86

(51) Int. Cl.⁴ : **F 16 H 1/28**, F 16 H 1/48

(21) Numéro de dépôt : **83102822.0**

(22) Date de dépôt : **22.03.83**

(54) **Dispositif de montage de couronnes de trains d'engrenages planétaires.**

(30) Priorité : **25.03.82 FR 8205070**

(43) Date de publication de la demande :
**05.10.83 Bulletin 83/40**

(45) Mention de la délivrance du brevet :
**30.07.86 Bulletin 86/31**

(84) Etats contractants désignés :
**AT BE CH DE FR GB IT LI LU NL SE**

(56) Documents cités :
**CH-A- 424 410**
**DE-A- 1 922 417**
**GB-A- 735 593**
**GB-A- 887 009**
**GB-A- 1 444 778**

(73) Titulaire : **Compagnie Intelautomatisme**
**1, rue de la Corderie Centra 379**
**F-94596 Rungis Cedex (FR)**

(72) Inventeur : **Piquet, Patrick**
**6, rue de Stockholm**
**F-67000 Strasbourg (FR)**
Inventeur : **Weber, François**
**7, impasse des Anémones**
**F-67400 Illkirch Graffenstaden (FR)**

(74) Mandataire : **Weinmiller, Jürgen**
**Zeppelinstrasse 63**
**D-8000 München 80 (DE)**

Jouve, 18, rue St-Denis, 75001 Paris, France

## Description

La présente invention concerne un dispositif de montage de couronnes de trains d'engrenages planétaires ou épicycloïdaux selon le préambule de la revendication 1 ou de la revendication 2. Un tel dispositif est connu, par exemple à partir du document CH-A-424 410.

On sait que les trains d'engrenages planétaires ou épicycloïdaux comportent un pignon central ou solaire engrenant avec des pignons satellites ou planétaires, lesquels engrenent à leur tour avec au moins une couronne dentée. Lesdits pignons satellites sont montés sur des organes dits porte-satellites.

Le pignon central est généralement entraîné par un arbre menant tandis que les porte-satellites sont liés à un arbre mené, là ou les couronnes dentées étant assujetties au bâti du train d'engrenages.

Il est également possible d'assujettir les porte-satellites au bâti du train d'engrenages, là où les couronnes dentées étant dans ce cas entraînées en rotation et solidarisées avec l'arbre mené.

Cependant, on constate que dans de tels engrenages, la transmission de couples de valeur importante conduit à augmenter le nombre de pignons satellites dans le but de réduire l'effort tangentiel au niveau des dentures des pignons.

Par ailleurs, si l'on considère le cas d'engrenages dont à la limite, les dentures sont géométriquement parfaites et qui sont insérés dans un carter également de géométrie parfaite, on démontre qu'un tel ensemble est hyperstatique, c'est-à-dire que l'absence de tous jeux dans les liaisons mutuelles des organes se traduit par une impossibilité du fonctionnement de l'ensemble.

Il est donc nécessaire pour assurer une bonne répartition des efforts au niveau des différentes dentures en contact, et pour tenir compte des défauts de fabrication dans la forme et le profil desdites dentures d'assurer un certain nombre de degrés de liberté, autrement dit, de rendre « flottants » certains organes, tels que pignons satellites, porte-satellites et couronnes dentées.

Il a alors été constaté qu'il était particulièrement avantageux d'envisager un montage souple ou flottant par rapport au bâti ou à l'arbre mené de la ou des couronnes à l'intérieur desquelles engrènent les pignons satellites.

Le document cité ci-dessus décrit un dispositif de montage de couronnes de trains d'engrenages planétaires, comprenant un pignon central, entraîné par un arbre menant et un porte-satellite lié à un arbre mené, les couronnes étant reliées au bâti par « poutres » ou « ponts » réalisés par des évidements dans un porte-couronne. Ces évidements donnent aux « poutres » restantes la souplesse nécessaire au fonctionnement. Cependant, dans ce dispositif, les moyens proposés sont disposés les uns à la suite des autres au détriment de l'encombrement. D'autre part, les déformations autorisées par ce dispositif ne conservent pas le parallélisme des arbres menant et mené.

L'invention a donc pour but de proposer un dispositif conforme aux préambules des revendications 1 et 2, qui soit très compact et dont le parallélisme entre les arbres menant et mené soit conservé même en présence de couples de valeur importante. Ce but est atteint par les dispositifs tels que caractérisés dans les revendications 1 et 2. En ce qui concerne certaines caractéristiques préférées d'une mise en œuvre de l'invention, référence est faite aux sous-revendications.

L'invention sera décrite ci-après plus en détail à l'aide de deux exemples donnés à titre d'exemples purement illustratifs mais nullement limitatifs en référence aux dessins annexés dans lesquels :

La figure 1 représente en coupe longitudinale selon l'axe I-I de la figure 2 un premier mode de réalisation du dispositif de montage souple de couronnes d'engrenages planétaires selon l'invention.

La figure 2 représente une coupe selon l'axe II-II de la figure 1.

La figure 3 et la figure 4 permettent d'expliciter le mode de fonctionnement du dispositif selon l'invention.

La figure 5 représente en coupe longitudinale selon l'axe V-V de la figure 6 un deuxième mode de réalisation du dispositif de montage souple de couronnes d'engrenages planétaires selon l'invention.

La figure 6 représente une coupe selon l'axe VI-VI de la figure 5.

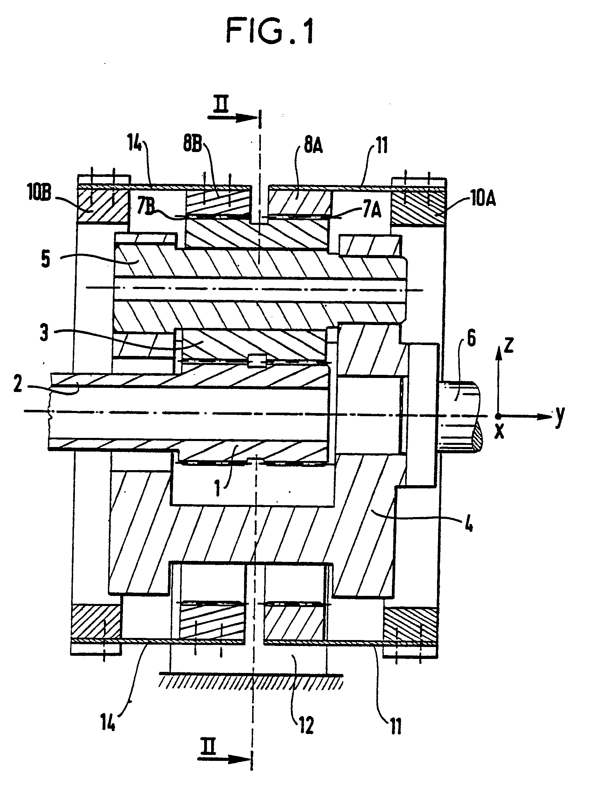

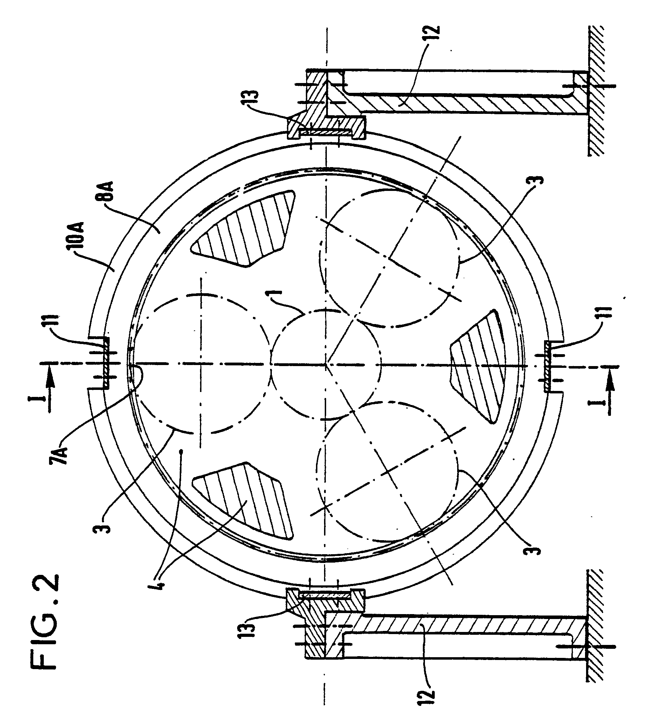

En référence aux figures 1 et 2 on a représenté un train d'engrenages du type planétaire comprenant un pignon central ou solaire 1 entraîné par un arbre menant 2. Ce pignon central 1 engrène avec trois pignons satellites ou planétaires 3 montés fous chacun sur un porte-satellite tel que 5, ces porte-satellites étant liés à l'arbre mené 6 du train d'engrenages par l'intermédiaire d'un organe rotatif 4.

Dans le mode de réalisation représenté, chacun des pignons satellites 3 comporte deux dentures 7A et 7B, la denture 7A engrenant à l'intérieur d'une première couronne 8A, tandis que la denture 7B engrène à l'intérieur d'une deuxième couronne 8B, ces deux couronnes étant donc fixes.

Conformément à la présente invention la couronne dentée 8A est reliée à une couronne dite couronne de liaison 10A par l'intermédiaire de deux poutres 11 cette couronne de liaison 10A étant elle-même assujettie au bâti 12 du train d'engrenages par l'intermédiaire de deux poutres 13. Les poutres 11 sont diamétralement opposées ainsi d'ailleurs que les poutres 13.

De la même manière, la couronne dentée 8B est reliée à une couronne de liaison 10B par l'intermédiaire de deux poutres 14, cette couronne de liaison 10B étant elle-même assujettie au bâti 12 du train d'engrenages par l'intermédiaire de deux poutres analogues aux poutres 13 (non représentées) ou tout simplement au moyen desdites poutres 13 précédemment décrites.

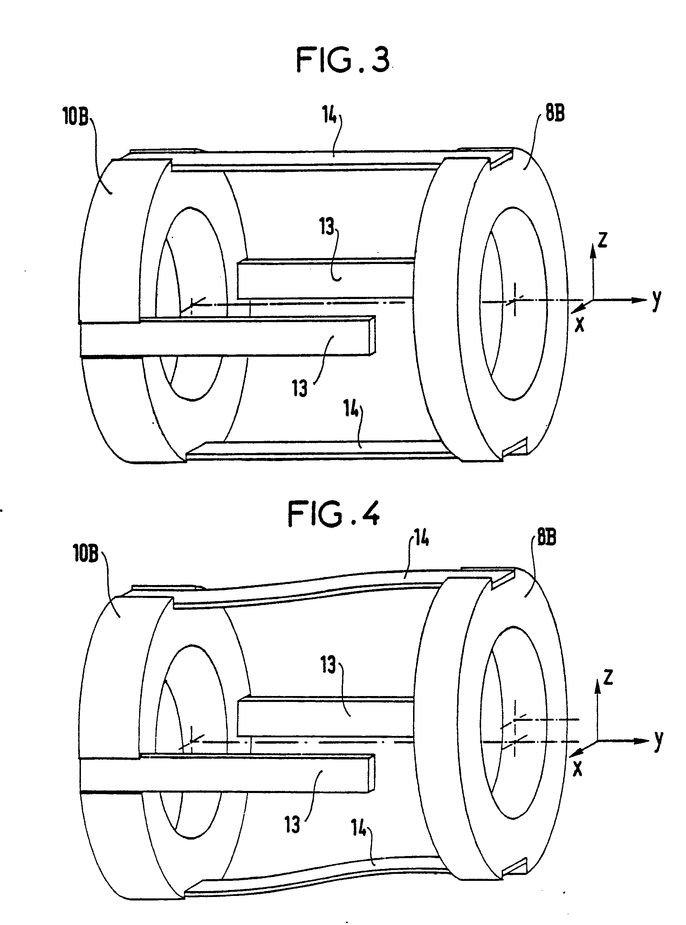

Par ailleurs le moment quadratique ou moment d'inertie desdites poutres sont prédéterminés de telle sorte que (voir également les figures 3 et 4) le moment d'inertie de flexion des poutres 11 et des poutres 14 soit supérieur selon l'axe Z donc selon un axe perpendiculaire à celui des arbres du train d'engrenages à celui selon l'axe X, également perpendiculaire audit axe des arbres et que en outre le moment d'inertie en flexion des poutres 13 selon l'axe X soit supérieur à celui selon l'axe Z. Autrement dit, les poutres 11 et 14 sont aptes à se déformer préférentiellement selon l'axe Z, tandis que les poutres 13 sont pour leur part susceptibles de se déformer préférentiellement selon l'axe X.

Si l'on se réfère à la figure 3, on voit la couronne dentée 8B reliée à la couronne de liaison 10B au moyen des poutres 14, ainsi que les poutres 13 assujettissant ladite couronne de liaison 10B au bâti 12 du train d'engrenage (non représenté sur ces figures).

Ces poutres sont encastrées dans les couronnes comme représenté sur la figure, mais il est bien évident que tout autre mode de liaison pourrait être envisagé.

Bien entendu, la couronne 8A est reliée à la couronne de liaison 10A de manière identique par les deux poutres 11, la couronne de liaison étant elle-même assujettie au bâti 12 du train d'engrenages au moyen des poutres 13. Un tel montage étant similaire à celui précédemment décrit par les couronnes 8B et 10B n'a donc pas été représenté.

Un tel montage, permet donc un déplacement relatif des couronnes dentées 8A et 8B selon l'axe X et par rapport aux couronnes de liaison 10A et 10B et de plus un déplacement global desdites couronnes dentées et desdites couronnes de liaison autour de l'axe Y par rapport au bâti 12 du train d'engrenages.

En conséquence, tout effort externe, autre qu'un couple suivant l'axe Y résultant par exemple d'un désalignement du moteur d'entraînement du train d'engrenages se traduit par une déformation des poutres précédemment décrites.

En référence à la figure 4, on voit que par exemple un des alignement entre la couronne 8B et la couronne de liaison 10B selon la direction Z se traduit par une flexion des poutres 14, tandis qu'un désalignement selon la direction X se traduirait par un fléchissement des poutres 13. On notera en outre que compte tenu du fait que les couronnes dentées et les couronnes de liaison demeurent parallèles entre elles, il ne se produit pas de déplacement appréciable selon la direction Y.

Bien entendu, un tel raisonnement est valable pour les couronnes 8B et 10B liées par les poutres 11 et 13.

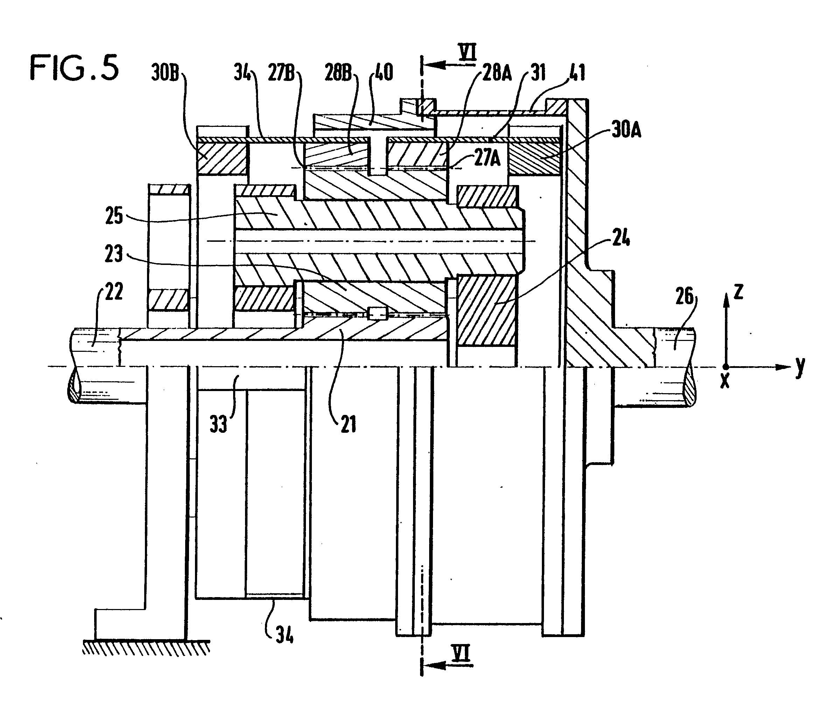

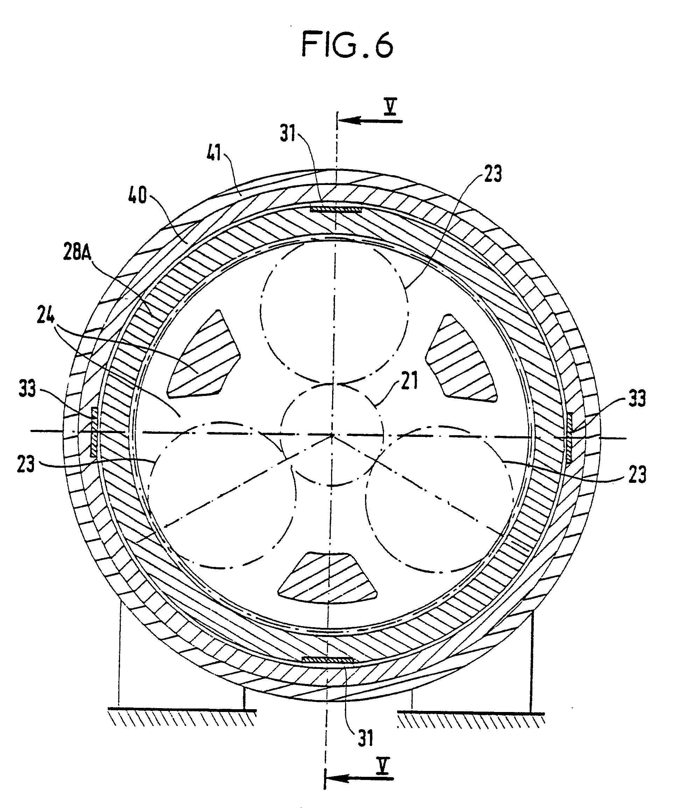

Les figures 5 et 6 représentent un deuxième mode de réalisation du dispositif selon l'invention.

On a donc représenté en référence à ces figures un train d'engrenages du type planétaire comprenant comme dans le mode de réalisation décrit dans ce qui précède un pignon central ou solaire 21 entraîné par un arbre menant 22. Ce pignon central 21 engrène avec trois pignons satellites ou planétaires 23 montés fous, chacun sur un porte-satellite tel que 25. Contrairement au mode de réalisation précédent, les porte-satellites sont fixes et liés au bâti du train d'engrenages par tout moyen approprié 24.

Chacun des pignons satellites 23 comporte deux dentures 27A et 27B, la denture 27A engrenant à l'intérieur d'une première couronne 28A tandis que la denture 27B engrène à l'intérieur d'une deuxième couronne 28B, ces deux couronnes étant donc entraînées en rotation par les pignons satellites 23.

Conformément à ce deuxième mode de réalisation selon l'invention la couronne dentée 28A est reliée à une couronne de liaison 30A par l'intermédiaire de deux poutres 31.

De même la couronne dentée 28B est reliée à une couronne de liaison 30B par l'intermédiaire de deux poutres 34.

Comme dans le précédent mode de réalisation les poutres 31 d'une part et les poutres 34 d'autre part sont diamétralement opposées.

Par ailleurs deux poutres 33 également diamétralement opposées assujettissent les couronnes de liaison 30A et 30B à un organe tournant 40 connecté à l'arbre mené 26 du train d'engrenages au moyen d'une pièce de liaison 41.

Comme dans le cas du premier mode de réalisation le moment quadratique ou moment d'inertie des poutres est prédéterminé de telle sorte que le moment d'inertie en flexion des poutres 31 et 34 soit supérieur selon l'axe Z à celui selon l'axe X, et que en outre le moment d'inertie en flexion des poutres 33 selon l'axe X soit supérieur à celui selon l'axe Z. Les poutres 31 et 34 sont donc aptes à se déformer préférentiellement en flexion selon l'axe Z, tandis que les poutres 33 sont pour leur part susceptibles de se déformer préférentiellement selon l'axe X.

De telles déformations sont d'ailleurs du même type que celles des poutres 14 et 13 telles que représentées sur les figures 3 et 4 dans le cas du premier mode de réalisation.

De toutes façons, quel que soit le mode de réalisation choisi, la liaison réalisée entre les couronnes du train d'engrenages et le bâti de l'arbre mené, et cela par l'intermédiaire de couronnes de liaison liées aux couronnes dentées au moyen de poutres présentant des moments d'inertie prédéterminés, selon une direction privilégiée, permet la transmission du couple de l'arbre menant à l'arbre mené tout en assurant les déflexions nécessaires au fonctionnement correct du train d'engrenages dans son ensemble.

L'invention est avantageusement mise en œuvre dans les machines-outils, et dans le domaine de la mécanique en général.

**Revendications**

1. Dispositif de montage de couronnes (8A, 8B) de trains d'engrenages planétaires, comportant un pignon central (1) lié à un premier arbre (2), ledit pignon central engrenant avec au moins un pignon satellite (3) monté sur un porte-satellite (5) lié à un deuxième arbre (6), ledit pignon satellite (3) engrenant lui-même à l'intérieur d'au moins une desdites couronnes (8A, 8B), ladite couronne (8A, 8B) étant reliée à une couronne dite couronne de liaison (10A, 10B) au moyen d'au moins deux premières poutres (11, 14), ladite couronne de liaison étant elle-même assujettie au bâti (12) du train d'engrenages par l'intermédiaire d'au moins deux secondes poutres (13), caractérisé en ce que lesdites poutres (11, 14) et (13) sont montées sur un diamètre extérieur des couronnes en va-et-vient de sorte que la poutre (11, 14) s'étend de la couronne (8A, 8B) jusqu'à la couronne de liaison (10A, 10B) et que la poutre (13) s'étend de la couronne de liaison (10A, 10B) vers la couronne (8A, 8B).

2. Dispositif de montage de couronnes (28A, 28B) de trains d'engrenages planétaires, comportant un pignon central (21) lié à un premier arbre (22), ledit pignon central engrenant avec au moins un pignon satellite (23) monté sur un porte-satellite (25) fixe lié au bâti du train d'engrenages, ledit pignon satellite (23) engrenant lui-même à l'intérieur d'au moins l'une desdites couronnes (28A, 28B) et entraînant en rotation cette couronne ainsi qu'un deuxième arbre (26) assujetti à ladite couronne (28A, 28B), ladite couronne étant reliée à une couronne dite couronne de liaison (30A, 30B) au moyen d'au moins deux premières poutres (31, 34), ladite couronne de liaison étant elle-même assujettie audit deuxième arbre (26) par l'intermédiaire d'au moins deux secondes poutres (33), caractérisé en ce que lesdites poutres (31, 34) et (33) sont montées sur un diamètre extérieur des couronnes en va-et-vient, de sorte que la poutre (31, 34) s'étend de la couronne (28A, 28B) jusqu'à la couronne de liaison (30A, 30B) et que la poutre (33) s'étend de la couronne de liaison (30A, 30B) vers la couronne (28A, 28B).

3. Dispositif selon l'une des revendications 1 ou 2, caractérisé par le fait que lesdites deux premières poutres (11, 14, 31, 34) présentent un moment d'inertie en flexion selon un axe (Z) perpendiculaire à celui (Y) des arbres dudit train d'engrenages supérieur au moment d'inertie en flexion selon un axe (X) également perpendiculaire audit axe (Y) et perpendiculaire auxdites deux secondes poutres (13, 33).

4. Dispositif selon l'une des revendications 1 à 3, caractérisé par le fait que lesdites secondes poutres (13, 33) présentent un moment d'inertie en flexion selon un axe (X) perpendiculaire à celui des arbres du train d'engrenages supérieur au moment d'inertie en flexion selon un axe (Z) perpendiculaire au plan défini par les deux autres axes précités (Y, X).

5. Train d'engrenages comportant au moins un dispositif de montage de couronnes selon l'une des revendications précédentes.

**Claims**

1. A device for mounting crowns (8A, 8B) of planetary gear transmissions, comprising a central pinion (1) connected to a first shaft (2), said central pinion gears with at least one satellite pinion (3) mounted on a satellite-carrier (5) connected to a second shaft (6), said satellite pinion (3) gearing itself in the inside of at least one of said crowns (8A, 8B), said crown (8A, 8B) being connected to a crown called connection crown (10A, 10B) via at least two first beams (11, 14), said connection crown being itself fastened to the casing (12) of the gear transmission via at least two second beams (13), characterized in that said beams (11, 14) and (13) are mounted on an outer diameter of the crowns in a to and fro manner so that the beam (11, 14) extends from the crown (8A, 8B) to the connection crown (10A, 10B) and that the beam (13) extends from the connection crown (10A, 10B) towards the crown (8A, 8B).

2. A device for mounting crowns (28A, 28B) of planetary gear transmissions, comprising a central pinion (21) connected to a first shaft (22), said central pinion gearing with at least one satellite pinion (23) mounted on a stationary satellite-carrier (25) connected to the casing of the gear transmission, said satellite pinion (23) itself gearing in the inside of at least one of said crowns (28A, 28B) and driving into rotation said crown as well as a second shaft (26) fixed to said crown (28A, 28B), said crown being connected to a crown called connection crown (30A, 30B) by means of at least two first beams (31, 34), said connection crown being itself fastened to said second shaft (26) via at least two second beams (33), characterized in that said beams (31, 34) and (33) are mounted on an outside diameter of the crowns in a to and for manner, so that the beam (31, 34) extends from the crown (28A, 28B) to the connection crown (30A, 30B) and that the beam (33) extends from the connection crown (30A, 30B) towards the crown (28A, 28B).

3. A device according to one of claims 1 or 2, characterized in that two first beams (11, 14, 31, 34) present a moment of inertia in flexion along an axis (Z) perpendicular to that (Y) of the shafts of said gear transmission which moment is higher than the moment of inertia in flexion along an axis (X) equally perpendicular to said axis (Y) and perpendicular to said two second beams (13, 33).

4. A device according to one of claims 1 to 3, characterized in that said second beams (13, 33) present a moment of inertia in flexion along an axis (X) perpendicular to that of the shafts of the gear transmission which moment is higher than the moment of inertia in flexion along an axis (Z) perpendicular to the plane defined by the two other aforementioned axes (Y, X).

5. A gear transmission comprising at least one device for mounting crowns according to one of the preceding claims.

**Patentansprüche**

1. Vorrichtung für die Montage von Kränzen (8A, 8B) von Planetenzahnradgetrieben, mit einem Zentralritzel (1), das mit einer ersten Welle (2) verbunden ist und in mindestens ein auf einem mit einer zweiten Welle (6) verbundenen Satellitenhalter (5) montiertes Satellitenritzel (3) eingreift, während dieses Satellitenritzel (3) selbst in das Innere mindestens eines der Kränze (8A, 8B) eingreift, wobei der Kranz (8A, 8B) mit einem Verbindungskranz (10A, 10B) genannten Kranz über mindestens zwei erste Balken (11, 14) verbunden ist, während dieser Verbindungskranz selbst über mindestens zwei zweite Balken (13) mit dem Gehäuse (12) des Zahnradgetriebes verbunden ist, dadurch gekennzeichnet, daß die Balken (11, 14) und (13) auf einem Außendurchmesser der Kränze hin und her so angeordnet sind, daß der Balken (11, 14) vom Kranz (8A, 8B) bis zum Verbindungskranz (10A, 10B) erstreckt und daß der Balken (13) von dem Verbindungskranz (10A, 10B) in Richtung zum Kranz (8A, 8B) reicht.

2. Vorrichtung für die Montage von Kränzen (28A, 28B) von Planetenzahnradgetrieben, mit einem mit einer ersten Welle (22) verbundenen Zentralritzel (21), das in mindestens ein Satellitenritzel (23) eingreift, das auf einem festen Satellitenhalter (25) angebracht ist, welcher mit dem Gehäuse des Zahnradgetriebes verbunden ist, wobei das Satellitenritzel (23) selbst ins Innere mindestens eines dieser Kränze (28A, 28B) eingreift und diesen Kranz wie auch eine mit diesem Kranz (28A, 28B) verbundene zweite Welle (26) in Drehung versetzt, wobei der Kranz mit einem Verbindungskranz (30A, 30B) genannten Kranz über mindestens zwei erste Balken (31, 34) verbunden ist, während dieser Verbindungskranz selbst mit der zweiten Welle (26) über mindestens zwei zweite Balken (33) verbunden ist, dadurch gekennzeichnet, daß die Balken (31, 34) und (33) auf einem Außendurchmesser der Kränze hin und her so angeordnet sind, daß der Balken (31, 34) sich vom dem Kranz (28A, 28B) bis zum Verbindungskranz (30A, 30B) erstreckt und der Balken (33) von dem Verbindungskranz (30A, 30B) in Richtung zum Kranz (28A, 28B) reicht.

3. Vorrichtung nach einem der Ansprüche 1 oder 2, dadurch gekennzeichnet, daß die beiden ersten Balken (11, 14, 31, 34) ein Biege-Trägheitsmoment in Richtung einer Achse (Z) quer zur Achse (Y) der Wellen des Zahnradgetriebes aufweist, das größer ist als das Biege-Trägheitsmoment in Richtung einer Achse (X), die ebenfalls quer zur Achse (Y) und quer zu den beiden zweiten Balken (13, 33) liegt.

4. Vorrichtung nach einem der Ansprüche 1 bis 3, dadurch gekennzeichnet, daß die zweiten Balken (13, 33) ein Biege-Trägheitsmoment in Richtung einer Achse (X), die quer zur Achse der Wellen des Zahnradgetriebes liegt, aufweist, das größer ist als das Biege-Trägheitsmoment entlang einer Achse (Z) quer zu einer von den beiden anderen vorgenannten Achsen (Y, X) gebildeten Ebene.

5. Zahnradgetriebe, das mindestens eine Vorrichtung zur Montage von Kränzen gemäß einem der vorhergehenden Ansprüche aufweist.

# FIG.1

FIG.2

# FIG.3

# FIG.4

FIG.5

0 090 326

# FIG.6